# EUROPEAN PATENT APPLICATION

(11) **EP 3 407 612 A1**
(43) Date of publication of application: **28.11.2018**
(21) Application number: 17172208.5
(22) Date of filing: 22.05.2017
(51) Int. Cl.: H04N 21/41, H04N 21/488, H04N 5/445

(54) **APPARATUS FOR A SUBTITLE POSITIONING AND A METHOD THEREOF**

(71) Applicant: Vestel Elektronik Sanayi ve Ticaret A.S., 45030 Manisa (TR)
(72) Inventor: SAHIN GEBIZLI, Ceren, 45030 Manisa (TR); ÖCAL, Ömür, 45030 Manisa (TR)
(74) Representative: Ascherl, Andreas

(57) **Abstract**

The present invention refers to an apparatus for a subtitle positioning in a broadcasting device (6). The apparatus can provide the alternative subtitle positioning for the broadcasting device (6) which either uses an external display device (8) or an external projecting device. That means either the apparatus can display the subtitle information in a separate display device externally from the broadcasting device (6) or the apparatus can project the subtitle information above (5) or below (7) of a screen from the broadcasting device (6). In particular, the subtitle information is projected on the wall (10) where the broadcasting device (6) is mounted. Thus the apparatus provides the user (18) an option to view the broadcasted program in a wide zoom mode and also to view the subtitle information clearly.

## Description

This invention refers to an apparatus for alternative subtitle positioning using an external display device according to claim 1, a method for alternative subtitle positioning using an external display device according to claim 7, an apparatus for alternative subtitle positioning using an external projecting device according to claim 4, and a method for alternative subtitle positioning using an external display device according to claim 8.

### Background of the Invention

Subtitles are text transcripts of TV dialogue that is displayed on a TV screen according to positional option selected by the user. Mainly, the subtitles are superimposed on a video image for conveying information to the user. Conventionally, the subtitles are provided in the bottom and top of the TV screen and sometimes the subtitle information may be provided in the center of the TV screen. The subtitle language, font size and style can be varied using the menu of the TV or broadcasting device according to the user preference.

Nowadays, a user prefers to watch broadcasted video in wide screen TVs. Moreover, the widescreen televisions are providing several modes such as normal mode, full mode, zoom mode, wide zoom and so on for displaying video. These modes can be selected manually via a remote control or automatically. However, there is a limitation in such subtitle positioning method, because the user may not able to view the full picture in the display screen. Sometimes the subtitle information may not be clear due to the subtitle information merged with the video content.

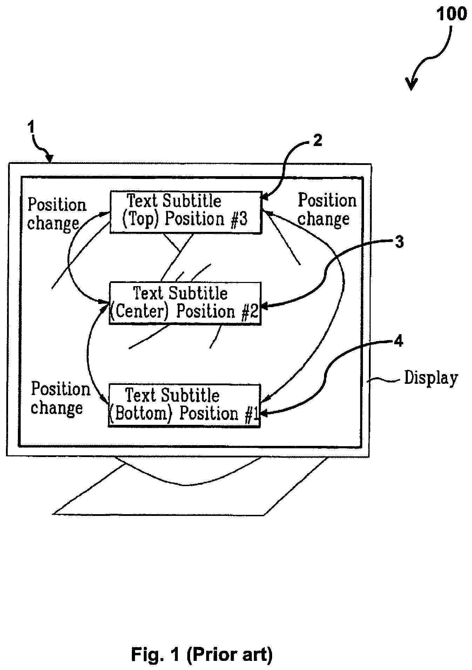

Prior art document US7751688B2 discloses a methods and apparatuses for reproducing subtitle streams from a recording medium. The recording medium for reproduction of images includes text subtitle streams. At least one of the text subtitle streams includes text data for a text subtitle and a set of style information corresponding to a set of user-selectable styles, respectively. Each style information includes a unique set of display properties required for displaying the text subtitle within a display screen. When one of the set of user-selectable styles is selected by a user, display properties of the text subtitle within the display screen are automatically changed to the selected style. Fig.1 illustrates the display screen 1 and the position of the subtitle information. The subtitle information can be at bottom 4 or top 2 or at the center 3 of the TV screen. The position can be changed directly from top 2 to bottom 4 or bottom 4 to top 2 position. Further, the postion can be changed from bottom 4 to center 3 and then to top 2 position for displaying the subtitle information. But the subtitle information may not be clear due to merging along with the video content.

There are several patent documents such as CA2172010A1, EP1326451A1, US5471249A, US6663244B1, US7898596B2 and US2009228948A1 which describe different proposals about subtitle positioning. But none of them solve the limitiation regarding the clarity of the subtitle information due to merging along with the video content.

The subject-matter of the prior arts does not provide a solution for elimnating the unclarity of subtitle information that is displayed on the TV screen.

### Object of the Invention

It is therefore the object of the present invention to provide an appartus, in particular an apparatus for alternative subtitle positioning, and a method for solving the issue related to provide clear subtitle information compared to the known devices and methods.

### Description of the Invention

The before mentioned object is solved by an apparatus for alternative subtitle positioning according to claim 1. The apparatus for alternative subtitle positioning using an external device according to the present invention preferably comprises of a broadcasting device and an external display device. The broadcasting device is provided to broadcast a program of users' interest, and a menu provided in the broadcasting device for selecting the subtitle. The external display device is provided separately for displaying subtitles of the program. The external display device includes a display unit, a processing unit, a receiver and a power supply. The receiver can be configured for obtaining and transferring the subtitle information from the broadcasting device to the display unit via the processing unit of the external display device. The subtitle information can be changed via the menu. The display unit can be configured for displaying the subtitle information obtained from the processing unit.

This solution is beneficial, since such an apparatus for alternative subtitle positioning solves the limitiation by providing an external display device for the subtitle information.

The apparatus for alternative subtitle positioning according to the present invention can be applied or can be part of any display units that needs to provide subtitle information to the user.

Further preferred embodiments are subject-matter of dependent claims and/or of the following specification parts.

According to a preferred embodiment of the present invention, an option can be provided in the broadcasting device to display the subtitle information externally using the external display device or internally in a display screen of the broadcasting device. The external display device can provide subtitle information for videos broadcasted from internet browser in smart TVs.

The before mentioned object is also solved by an apparatus for alternative subtitle positioning, in particular an apparatus for alternative subtitle positioning using external projecting device, according to claim 4. The apparatus for alternative subtitle positioning comprises of a broadcasting device and an external projecting device. The broadcasting device is provided to broadcast a program of users' interest. A menu is provided in the broadcasting device for selecting the subtitle. The external projecting device is provided inside the broadcasting device for displaying subtitles of a program. Further, the external projecting device includes a projector, a processing unit, a receiver and a power supply. The receiver can be configured for obtaining and transferring the subtitle information from the broadcasting device to the projector unit via the processing unit of the external projecting device. The subtitle information changed via the menu. The projector can be configured for displaying the subtitle information above or below a screen of the broadcasting device.

According to a further embodiment of the present invention, an option provided in the broadcasting device to display the subtitle information externally using the external projecting device or internally in a display screen of the broadcasting device. The external projecting device provides subtitle information for videos broadcasted from internet browser in smart TVs.

The before mentioned object is also solved by a method for alternative subtitle positioning using external display device according to claim 7. Said method preferably comprising the steps of: obtaining a subtitle information from a broadcasting device to an external display device, transferring the subtitle information from a processing unit to a display unit, presenting the subtitle information in the display unit provided in the external display device, and changing the subtitle information in the broadcasting device via a menu based on requirement.

The before mentioned object is also solved by a method for alternative subtitle positioning using external projecting device according to claim 8. Said method preferably comprising the steps of: obtaining subtitle information from a broadcasting device to an external projecting device, transferring the subtitle information from a processing unit to a projector, presenting the subtitle information in the projector unit provided in the external projector device, and changing the subtitle information in the broadcasting device via a menu based on requirement.

Further benefits, goals and features of the present invention will be described by the following specification of the attached figures, in which components of the invention are exemplarily illustrated. Components of the devices and method according to the inventions, which match at least essentially with respect to their function, can be marked with the same reference sign, wherein such components do not have to be marked or described in all figures.

The invention is just exemplarily described with respect to the attached figures in the following.

### Brief Description of the Drawings

- Fig. 1: illustrates various examples of changing the position and font size of a subtitle according to a prior art;
- Fig. 2: illustrates the alternative subtitle positioning for a broadcasting device according to the present invention;
- Fig. 3: illustrates the alternative subtitle positioning using an external display device for a broadcasting device, according to the present invention;
- Fig. 4: illustrates the alternative subtitle positioning using an external projecting device for a broadcasting device, according to the present invention;
- Fig. 5: illustrates method involved for the alternative subtitle positioning using an external display device, according to the present invention; and
- Fig. 6: illustrates method involved for the alternative subtitle positioning using an external projecting device, according to the present invention.

### Detailed Description of the Drawings

Fig. 1 illustrates various examples 100 of changing the position and font size of a subtitle according to the prior art.

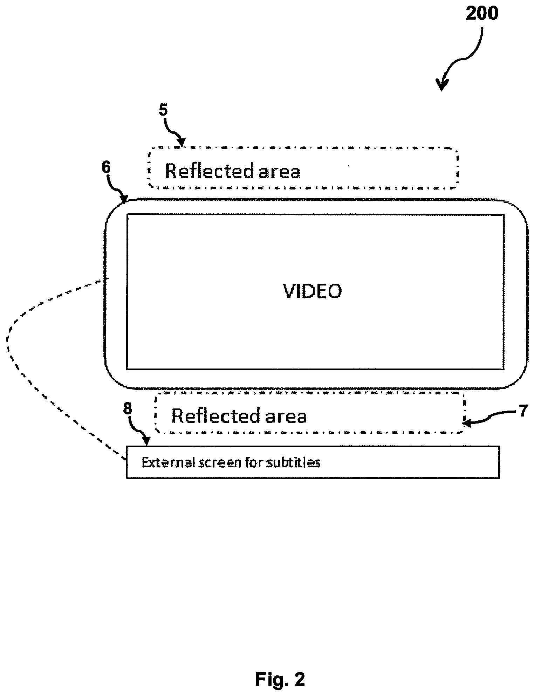

Fig. 2 illustrates the subtitle positioning for a broadcasting device 200 according to the present invention. The apparatus can provide the alternative subtitle positioning for the broadcasting device 6 either using an external display device 8 or an external projecting device. That is the apparatus display the subtitle information in a separate display device externally from the broadcasting device 6. Otherwise, the apparatus can project the subtitle information above 5 or below 7 a screen from the broadcasting device 6. That is the subtitle information is projected on the wall 10 where the broadcasting device 6 is mounted. Either, on top of the broadcasting device 6 the subtitle information can be reflected in the reflected area at top 5 on the wall 10. Otherwise, on bottom side of the broadcasting device 6 the subtitle information can be reflected in the reflected area at bottom 7 on the wall 10.

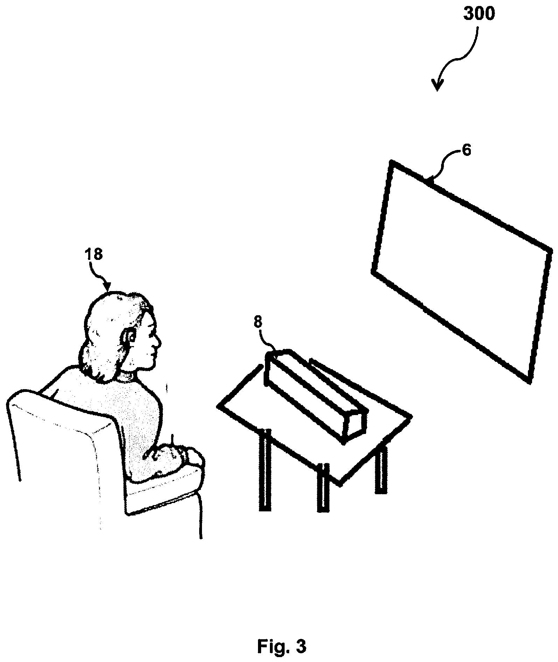

Fig. 3 illustrates the alternative subtitle positioning using an external display device 300 for a broadcasting device 6, according to the present invention. The apparatus for alternative subtitle positioning using external device according to the present invention preferably comprises of a broadcasting device 6 and an external display device 8. The broadcasting device 6 is provided to broadcast a program of users' 18 interest. The external display device 8 is provided separately for displaying subtitles of the program. The external display device 8 includes a display unit, a processing unit, a receiver and a power supply. The receiver can be configured for obtaining and transferring the subtitle information from the broadcasting device 6 to the display unit via the processing unit of the external display device 8. The subtitle information can be changed via the menu. The display unit can be configured for displaying the subtitle information obtained from the processing unit. The display unit can be kept near the user 18 or viewer. Otherwise, it can be kept near the broadcasting device 6. The display unit provides a translated version of the program on the broadcasting device 6 by changing the option in the menu.

According to the preferred embodiment of the present invention, an option can be provided in the broadcasting device 6 to display the subtitle information externally using the external display device 8 or internally in a display screen of the broadcasting device 6. For example, if the user 18 wants to see the subtitles in the screen of the broadcasting device 6, then the user 18 can select the option of internal display of subtitle. The external display device 8 can provide subtitle information for videos broadcasted from internet browser in smart TVs. Further, if the smart TV is connected to internet and started to broadcast video then, for that also the external display device 8 can provide subtitle information.

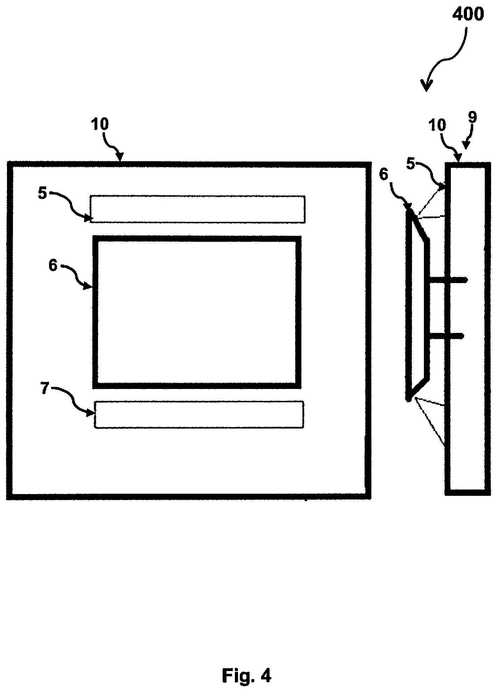

Fig. 4 illustrates the alternative subtitle positioning using an external projecting device 400 for a broadcasting device 6, according to the present invention. The apparatus for alternative subtitle positioning using external projecting device comprises of a broadcasting device 6 and an external projecting device. The broadcasting device 6 is provided to broadcast a program of users' 18 interest. The external projecting device is provided inside the broadcasting device 6 for displaying subtitles of a program. Further, the external projecting device includes a projector, a processing unit, a receiver and a power supply. The receiver can be configured for obtaining and transferring the subtitle information from the broadcasting device 6 to the projector unit via the processing unit of the external projecting device. The subtitle information changed via the menu. The projector can be configured for displaying the subtitle information above 5 or below 7 a screen of the broadcasting device 6. Further, the projector is fixed in the backside of the broadcasting device 6 for reflecting back on the wall 10 above 5 or below 7 the broadcasting device 6. The side-view 9 of the wall 10 mounted broadcasting device 6 of the shows the position of projector for displaying the subtitle information on the wall 10.

According to another embodiment of the present invention, an option can be provided in the broadcasting device 6 to display the subtitle information externally using the external display device 8 or internally in a display screen of the broadcasting device 6. For example, if the user 18 wants to see the subtitles in the screen of the broadcasting device 6, then the user 18 can select the option of internal display of subtitle. The external projecting device can provide subtitle information for videos broadcasted from internet browser in smart TVs. Further, if the smart TV is connected to internet and started to broadcast video then, for that also the external projecting device can provide subtitle information.

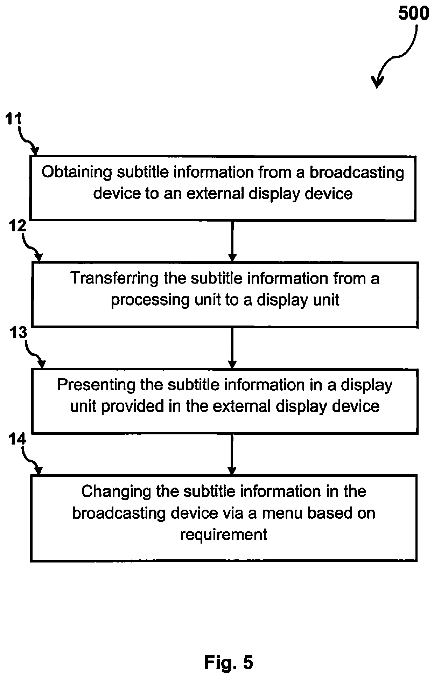

Fig. 5 illustrates method 500 involved for the alternative subtitle positioning using an external display device 8, according to the present invention. The before mentioned object is also solved by a method for alternative subtitle positioning using external display device 8 according to claim 7. Said method preferably comprising the steps of:
at block 11, the subtitle information is obtained from a broadcasting device 6 to an external display device 8,
at block 12, the subtitle information is transferred from a processing unit to a display unit,
at block 13, the subtitle information is displayed in the display unit provided in the external display device 8, and
at block 14, the subtitle information is changed in the broadcasting device 6 via a menu based on requirement.

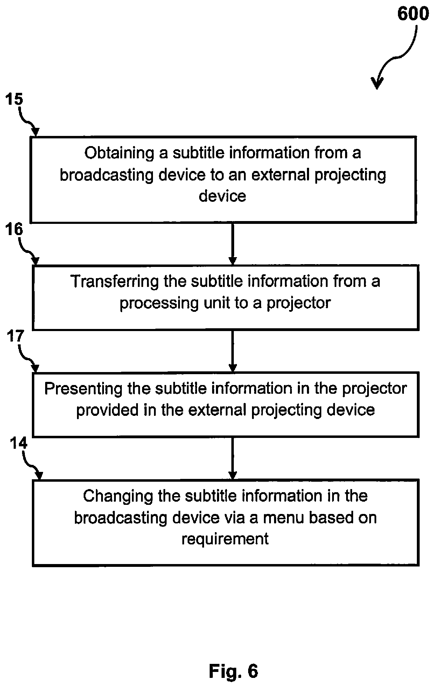

Fig. 6 illustrates method 600 involved for the alternative subtitle positioning using an external projecting device, according to the present invention. The before mentioned object is also solved by a method for alternative subtitle positioning using external projecting device according to claim 8. Said method preferably comprising the steps of:
at block 15, subtitle information is obtained from a broadcasting device 6 to an external projecting device,
at block 16, the subtitle information is transferred from a processing unit to a projector,
at block 17, the subtitle information is displayed in the projector unit provided in the external projector device, and
at block 14, the subtitle information is changed in the broadcasting device 6 via a menu based on requirement.

Thus, the present invention refers to an apparatus for a subtitle positioning in a broadcasting device 6. The apparatus can provide the alternative subtitle positioning for the broadcasting device 6, which either uses an external display device 8 or an external projecting device. That means either the apparatus can display the subtitle information in a separate display device externally from the broadcasting device 6 or the apparatus can project the subtitle information above 5 or below 7 of a screen from the broadcasting device 6. In particular, the subtitle information is projected on the wall 10 where the broadcasting device 6 is mounted. Thus the apparatus provides the user 18 an option to view the broadcasted program in a wide zoom mode and also to view the subtitle information clearly.

### List of reference numbers

- 1: display screen in the prior art
- 2: text position in top
- 3: text position in center
- 4: text position in bottom
- 5: reflected area on top or above the broadcasting device
- 6: broadcasting device in the present invention
- 7: reflected area on bottom or below the broadcasting device
- 8: external display device
- 9: side-view of the broadcasting device
- 10: wall
- 11: obtaining subtitle information from a broadcasting device to an external display device
- 12: transferring the subtitle information from a processing unit to a display unit
- 13: presenting the subtitle information in a display unit provided in the external display device
- 14: changing the subtitle information in the broadcasting device via a menu based on requirement
- 15: obtaining subtitle information from a broadcasting device to an external projecting device
- 16: transferring the subtitle information from a processing unit to a projector
- 17: presenting the subtitle information in the projector provided in the external projecting device
- 18: user or viewer
- 100: various examples of changing the position and font size of a subtitle according to the prior art
- 200: the alternative subtitle positioning for a broadcasting device
- 300: the alternative subtitle positioning using an external display device
- 400: the alternative subtitle positioning using an external projecting device
- 500: a method for the alternative subtitle positioning using an external display device
- 600: a method for the alternative subtitle positioning using an external projecting device

## Claims

1. An apparatus for a subtitle positioning which comprises
a broadcasting device (6) provided to broadcast a program of the users (18) interest;
a menu provided in the broadcasting device (6) for selecting the subtitle; **characterized in that**
an external display device (8) provided separately for displaying subtitles of the program is provided;
wherein the external display device (8) includes a display unit, a processing unit, a receiver and a power supply;
wherein the receiver is configured for obtaining and transferring the subtitle information from the broadcasting device (6) to the display unit via the processing unit of the external display device (8);
wherein the subtitle information is changed via the menu; and
wherein the display unit is configured for displaying the subtitle information obtained from the processing unit.

2. The apparatus of claim 1, wherein an option is provided in the broadcasting device (6) to display the subtitle information externally using the external display device (8) or internally in a display screen of the broadcasting device (6).

3. The apparatus of claim 1, wherein the external display device (8) provides subtitle information for videos broadcasted from an internet browser in smart TVs.

4. An apparatus for a subtitle positioning which comprises
a broadcasting device (6) provided to broadcast a program of users' (18) interest; a menu provided in the broadcasting device (6) for selecting the subtitle;
**characterized in that**
an external projecting device is provided inside the broadcasting device (6) for displaying subtitles of the program;
wherein the external projecting device includes a projector, a processing unit, a receiver and a power supply;
wherein the receiver is configured for obtaining and transferring the subtitle information from the broadcasting device (6) to the projector unit via the processing unit of the external projecting device;
wherein the subtitle information is changed via the menu; and
wherein the projector is configured for displaying the subtitle information above (5) or below (7) a screen of the broadcasting device (6).

5. The apparatus of claim 1, wherein an option is provided in the broadcasting device (6) to display the subtitle information externally using the external projecting device or internally in a display screen of the broadcasting device (6).

6. The apparatus of claim 1, wherein the external projecting device provides subtitle information for videos broadcasted from an internet browser in smart TVs.

7. A method for a subtitle positioning comprising the steps of
obtaining a subtitle information from a broadcasting device (6) to an external display device (8);
transferring the subtitle information from a processing unit to a display unit; presenting the subtitle information in the display unit provided in the external display device (8); and
changing the subtitle information in the broadcasting device (6) via a menu based on requirement.

8. A method for alternative subtitle positioning comprising the steps of,
obtaining a subtitle information from a broadcasting device (6) to an external projecting device;
transferring the subtitle information from a processing unit to a projector;
presenting the subtitle information in the projector unit provided in the external projector device; and
changing the subtitle information in the broadcasting device (6) via a menu based on requirement.
